# EUROPÄISCHE PATENTSCHRIFT

(11) **EP 1 373 685 B1**
(45) Veröffentlichungstag und Bekanntmachung des Hinweises auf die Patenterteilung: **19.10.2005**
(21) Anmeldenummer: 02727505.6
(22) Anmeldetag: 28.03.2002
(51) Int. Cl.: F01D 5/28, C23C 4/02, C23C 4/10, C01F 7/16

(54) **GASTURBINENSCHAUFEL**
GAS TURBINE BLADE
AUBE DE TURBINE A GAZ

(30) Priorität: 03.04.2001 EP 01108371
(43) Veröffentlichungstag der Anmeldung: 02.01.2004
(60) Teilanmeldung: 04011322.7
(73) Patentinhaber: SIEMENS AKTIENGESELLSCHAFT, 80333 München (DE)
(72) Erfinder: JANSING, Thomas, 91056 Erlangen (DE); FLECK, Robert, 91325 Adelsdorf (DE); SCHUMANN, Eckart, 45468 Mülheim (DE)
(86) Internationale Anmeldenummer: PCT/EP2002/003556
(87) Internationale Veröffentlichungsnummer: WO 2002/081868

(56) Entgegenhaltungen:
- WO-A-00/55386
- WO-A-01/00539
- WO-A-01/18274
- WO-A-96/34128
- CH-A- 660 200
- US-A- 4 576 874
- US-A- 4 878 812
- US-A- 5 338 577
- US-A- 5 350 599
- LALLEMAND G ET AL: "Fabrication process of spinel powder for plasma spraying" JOURNAL OF THE EUROPEAN CERAMIC SOCIETY, ELSEVIER SCIENCE PUBLISHERS, BARKING, ESSEX, GB, Bd. 18, Nr. 14, 1. Dezember 1998 (1998-12-01), Seiten 2095-2100, XP004144421 ISSN: 0955-2219

## Beschreibung

Die Erfindung betrifft eine Gasturbinenschaufel mit einer keramischen Wärmedämmschicht.

Die WO 01/00539 A2 offenbart einen keramischen Wärmedämmstoff für Hochtemperaturanwendungen. Der Werkstoff ist so ausgestaltet, dass ein thermischer Ausdehnungskoeffizient an den eines Metalls angepasst ist, so dass beim Aufbringen des keramischen Werkstoffs in Form einer Beschichtung auf einen metallischen Grundkörper es nur zu geringen thermischen Spannungen aufgrund unterschiedlicher thermischer Ausdehnung kommt. Hierzu weist der keramische Werkstoff zwischen 10 und 95 Gew.-% Magnesiumaluminat (MgAl₂O₄) MgAl-Spinell, zwischen 5 und 90 Gew.-% Magnesiumoxid (MgO) und bis zu 20 Gew.-% Aluminiumoxid (Al₂O₃) auf. Weiterhin sind Körner aus Magnesiumoxid in einer Magnesiumaluminat-Matrix eingebettet. Es wird ausgeführt, dass das Magnesiumaluminat als homogene Matrix vorliegen muss, die nicht aus zusammengesinterten Magnesiumaluminat-Körnern mit dazwischenliegenden Freiräumen besteht, sondern aus homogenem porenfreiem Magnesiumaluminat. In dieser Struktur ist das Magnesiumaluminat ausreichend thermisch stabil, um eine das Magnesiumoxid umschließende Hülle auch während des Vorgangs des thermischen Spritzens zu bewahren. Auf diese Weise bleibt der Bereich des Magnesiumoxids während des thermischen Spritzens umschlossen und das Magnesiumoxid kann nicht sublimieren oder verdampfen. Die Anwendung des keramischen Bauteils ist vorgesehen in einer Hochtemperatur-Brennstoffzelle, wo eine besonders dichte, nicht poröse keramische Schicht zur Vermeidung von Gasverlusten zum Einsatz kommen muss.

Die WO 98/26110 offenbart eine Wärmedämmschicht für Hochtemperaturanwendungen insbesondere bei Gasturbinenschaufeln. Solche Gasturbinenschaufeln sind besonders hohen Temperaturen ausgesetzt und dabei gleichzeitig hohen thermischen Belastungen unterworfen. Daher werden diese Gasturbinenschaufeln häufig aus einer Nickel-, Kobalt- oder Eisenbasis-Superlegierung gefertigt, die besondere Hochtemperaturfestigkeiten aufweist. Weiterhin werden die Gasturbinenschaufeln über ein inneres Kühlsystem mittels Kühlluft gekühlt. Zudem werden die Gasturbinenschaufeln über ein Schutzschichtsystem geschützt, das aus einer metallischen Korrosionsschutzschicht besteht, auf die eine keramische Wärmedämmschicht aufgebracht ist. Eine typische metallische Korrosionsschutzschicht ist beispielsweise eine Schicht aus der Basis-Legierung MCrAlY, die nicht nur korrosive Angriffe auf den Grundkörper abwehrt, sondern auch eine Haftvermittlung für die keramische Wärmedämmschicht bewirkt. Ein spezielles Problem stellt eine thermische Wechselbelastung dar, da die keramische Wärmedämmschicht einen gegenüber dem metallischen Grundkörper oder der metallischen Korrosionsschutzschicht unterschiedlichen Wärmeausdehnungskoeffizienten aufweist, was zu thermischen Spannungen führt. Dies wiederum hat eine signifikante Lebensdauerbegrenzung zur Folge, da das Versagen der keramischen Wärmedämmschicht aufgrund eines Abplatzens die Lebensdauer der Gasturbinenschaufel bestimmt. Übliche Wärmedämmschichten auf Zirkondioxid-Basis, die in der Regel mit Yttriumoxid phasenstabilisiert werden, können unter Umständen durch neuartige Keramiken ersetzt werden, die ternäre Oxide sind und eine Pyrochlor- oder Perowskitstruktur aufweisen. Typischerweise werden keramische Wärmedämmschichten durch ein atmosphärisches Plasmaspritzen oder eine Elektronenstrahlverdampfung aufgebracht.

Die US-PS 5,338,577 zeigt eine keramische Wärmedämmschicht, die zweischichtig ausgebildet ist, wobei die äußere Schicht aus Aluminiumoxid gebildet ist. Die Aluminiumoxidschicht wird bewusst über die innere Zirkonoxidschicht gelegt, weil Aluminiumoxid den höheren Abrasivwiderstand aufweist.

Der Erfindung liegt die Aufgabe zugrunde, eine Gasturbinenschaufel mit einer keramischen Wärmedämmschicht anzugeben, die eine besonders hohe Lebensdauer aufweist.

Erfindungsgemäß wird diese Aufgabe gelöst durch eine Gasturbinenschaufel mit einer keramischen Wärmedämmschicht gemäß Anspruch 1.

Die Gasturbinenschaufel kann sowohl als Laufschaufel als auch als Leitschaufel ausgeführt sein.

Eine Porosität größer als 3 Vol.-% bedeutet, dass Hohlräume in der keramischen Wärmedämmschicht mit einem Volumenanteil von größer als 3% vorhanden sind. Eine solche Porosität ist für eine keramische Wärmedämmschicht einer Gasturbinenschaufel praktisch unerlässlich, da nur so die niedrigen Wärmeleitfähigkeiten erreicht werden, die dem Schutz des gekühlten Grundkörpers der Gasturbinenschaufel dienen. Vorzugsweise ist der Volumenanteil der Hohlräume nicht größer als 40%. Wie oben beschrieben ist der genannte Werkstoff der keramischen Wärmedämmschicht, also die Magnesiumoxid (MgO)-Körner in einer Magnesiumaluminat (MgAl₂O₄)-Matrix, besonders gut geeignet, an metallische Wärmeausdehnungskoeffizienten angepasst zu werden. Der Vergrößerung des thermischen Ausdehnungskoeffizienten dienen die Körner aus Magnesiumoxid (MgO). Bisher ging man davon aus, dass Magnesiumoxid unter hohen Temperaturen beim thermischen Spritzen ungeeignet für eine keramische Wärmedämmschicht ist. Selbst bei der Matrix aus Magnesiumaluminat (MgAl₂O₄) mit Spinellstruktur wurde davon ausgegangen, dass eine Stabilität des Magnesiumoxids nur durch eine dichte, keine Hohlräume aufweisende Matrix aus Magnesiumaluminat (MgAl₂O₄) erreichbar ist. Da solche dichten, unporösen Strukturen aber, wie erwähnt, nicht für den Einsatz bei einer Gasturbinenschaufel geeignet sind, wurde dieser Werkstoff nicht als keramische Wärmedämmschicht auf einer Gasturbinenschaufel in Erwägung gezogen. Nach Erkenntnis der Erfindung ist es aber jetzt doch möglich, in einem konventionellen Prozess des thermischen Spritzens eine poröse keramische Wärmedämmschicht der genannten Art herzustellen. Damit läßt sich nun insbesondere die besonders gute Anpassung des thermischen Längenausdehnungskoeffizienten der keramischen Wärmedämmschicht an den metallischen Grundkörper für die Gasturbinenschaufel nutzbar machen.
A) Vorzugsweise weisen die MgO-Körner in dem ersten Schichtbereich einen mittleren Durchmesser von 0,1 µm bis 2 µm auf. Diese Korngröße wirkt sich besonders vorteilhaft auf die Spritzfähigkeit des keramischen Werkstoffs aus.
B) Bevorzugt enthält das Material der Wärmedämmschicht in dem ersten Schichtbereich 55 bis 80 Gew.-% Magnesiumoxid. Ein solcher Werkstoff weist je nach Menge an Magnesiumoxid einen thermischen Ausdehnungskoeffizienten auf, der bei 1000 °C zwischen 11 und 12 x 10⁻⁶ K⁻¹ liegt. In diesem Bereich ist der Werkstoff besonders gut an den thermischen Ausdehnungskoeffizienten des metallischen Grundkörpers angepasst.
C) Die Wärmedämmschicht enthält in dem ersten Schichtbereich zusätzlich mindestens ein Oxid aus der Gruppe Calciumoxid, Siliciumoxid, Zirkonoxid und Eisenoxid. Diese Materialien wirken sich als Zusatzstoffe günstig auf die Materialeigenschaften des Werkstoffs aus.
D) Weiter bevorzugt umfasst der Grundkörper eine auf die Superlegierung aufgebrachte metallische Korrosionsschutzschicht.
E) Der erste Schichtbereich besteht aus 10 bis 95 Gew.-% Magnesiumaluminat (MgAl₂O₄) und 5 bis 90 Gew.-% Magnesiumoxid (MgO) sowie 0 bis 20 Gew.-% Aluminiumoxid (Al₂O₃), während der zweite Schichtbereich aus Yttriumoxid-stabilisiertem Zirkondioxid besteht. In einem solchen Schichtsystem lassen sich die erprobten Eigenschaften des konventionellen Zirkondioxids mit den besonders günstigen Eigenschaften hinsichtlich der thermischen Ausdehnungsfähigkeit des neuen keramischen Werkstoffs aus Magnesiumaluminat (MgAl₂O₄) und Magnesiumoxid (MgO) kombinieren.
F) Vorzugsweise ist die keramische Wärmedämmschicht auf eine keramische Grundschicht aufgebracht, die eine Porosität kleiner als 2 Vol.-% aufweist. Die keramische Grundschicht kann die gleiche chemische Zusammensetzung wie die keramische Wärmedämmschicht haben, aber unter Umständen auch praktisch völlig dicht auf den metallischen Grundkörper aufgebracht sein. Die genannte Porosität der keramischen Wärmedämmschicht bezieht sich somit nicht auf diese keramische Grundschicht. Dies führt wiederum zu einer besonders günstigen Kombination von guten Wärmedämmeigenschaften einerseits und Abschirmung gegenüber korrosiven Angriffen andererseits.
G) Vorzugsweise nimmt die Porosität in der keramischen Wärmedämmschicht nach außen hin gradiert zu. Während also bisher definierte Schichtsysteme für die Kombination niedriger und hoher Porosität genannt wurden, ist nunmehr ein gradueller Übergang dichter Struktur zu Struktur mit hoher Porosität vorgeschlagen.

Die Ausführungen gemäß den Absätzen A) bis G) lassen sich auch untereinander kombinieren.

Die Erfindung wird anhand der Zeichnung beispielhaft näher erläutert. Es zeigen teilweise schematisch und nicht maßstäblich:
- FIG 1: eine Gasturbinenschaufel,
- FIG 2: eine keramische Wärmedämmschicht,
- FIG 3 - 5: in einem Längsschnitt verschiedene Konfigurationen einer keramischen Wärmedämmschicht auf einem Grundkörper einer Gasturbinenschaufel.

Gleiche Bezugszeichen haben in den verschiedenen Figuren die gleiche Bedeutung.

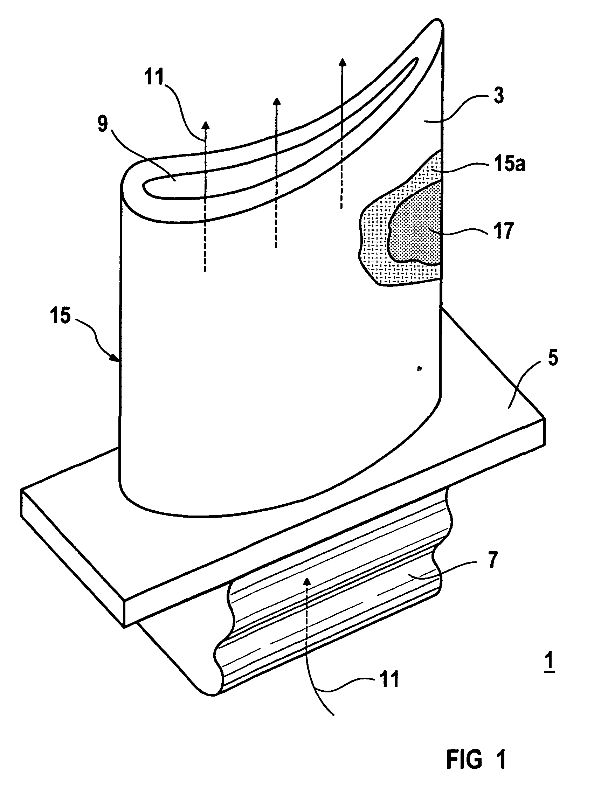

Figur 1 zeigt eine Gasturbinenschaufel 1. Die Gasturbinenschaufel 1 weist ein Schaufelblatt 3, eine Plattform 5 und einen Schaufelfuß 7 auf. Die Gasturbinenschaufel 1 weist weiter einen inneren Hohlraum 9 auf, durch den zur Kühlung Kühlluft 11 geleitet wird. Die Gasturbinenschaufel 1 ist aus einem Grundkörper 15 gebildet, der aus einer Nickel- oder Kobaltbasis-Superlegierung besteht. Der Grundkörper 15 umfasst auch eine äußere metallische Korrosionsschutzschicht 15A, die sowohl dem Schutz vor Korrosion als auch der Anbindung für eine keramische Wärmedämmschicht dient. Eine solche keramische Wärmedämmschicht 17, bestehend aus einem ersten Schichtbereich 31 und einem zweiten Schichtbereich 33, ist auf die Korrosionsschutzschicht 15A aufgebracht.

Beim Einsatz der Gasturbinenschaufel 1 wird das Schaufelblatt 3 von einem sehr heißen Gas umströmt. Es ist technisch nötig, die Gasturbinenschaufel 1 intensiv mittels der Kühlluft 11 zu kühlen. Weiterhin muss durch die keramische Wärmedämmschicht 17 die Gasturbinenschaufel 1 gegenüber dem heißen Gas thermisch abgeschirmt werden. Die Plattform 5 dient zur Abschirmung des heißen Gases von einer nicht näher dargestellten Rotorscheibe. In eine solche Rotorscheibe greift auch der Schaufelfuß 7 ein, mit der die Gasturbinenschaufel 1 an einem Gasturbinen-Rotor befestigt ist.

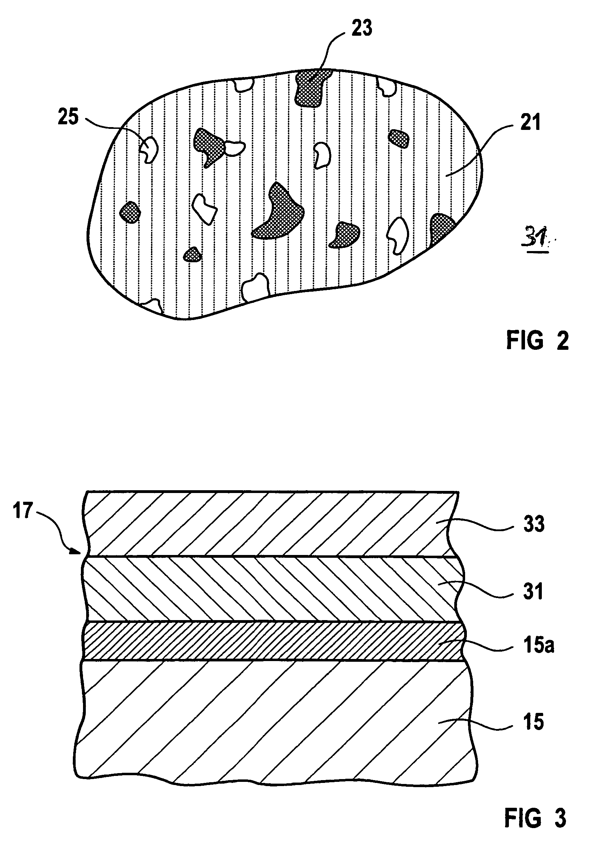

In Figur 2 ist schematisch der erste Schichtbereich 31 der keramischen Wärmedämmschicht 17 dargestellt. In eine Matrix 21 aus spinellförmigem Magnesiumaluminat sind Körner 23 aus Magnesiumoxid eingebettet. Diese Zusammensetzung führt insbesondere zu einem gegenüber einer konventionellen keramischen Wärmedämmschicht erhöhten Wärmeausdehnungskoeffizienten, so dass der thermische Wärmeausdehnungskoeffizient der Wärmedämmschicht 31 dem thermischen Wärmeausdehnungskoeffizienten des Grundkörpers 15 besser angepasst ist. Dies führt zu geringeren thermischen Spannungen, was insbesondere bei einer thermischen Wechselbelastung eine erheblich erhöhte Lebensdauer für die keramische Wärmedämmschicht 31 und damit auch der Gasturbinenschaufel 1 zur Folge hat. Überraschenderweise lässt sich die keramische Wärmedämmschicht 17 mit einer erheblichen Porosität herstellen. Diese Porosität bedeutet, dass Hohlräume 25 in der keramischen Wärmedämmschicht 31 eingeschlossen sind. Die Porosität ist größer als 3 Vol.-%, vorzugsweise größer als 5 Vol.-%. Erst durch diese Porosität wird eine genügend niedrige Wärmeleitfähigkeit für die keramische Wärmedämmschicht 17 erreicht.

Figur 3 zeigt in einem Längsschnitt eine keramische Wärmedämmschicht 17, die auf einem Grundkörper 15 einer Gasturbinenschaufel 1 aufgebracht ist. Hier ist die keramische Wärmedämmschicht 17 aus zwei Schichtbereichen aufgebaut: ein erster Schichtbereich 31, der an den Grundkörper 15, d.h. an die Korrosionsschutzschicht 15A angrenzt und einen auf den ersten Schichtbereich 31 aufgebrachten zweiten Schichtbereich 33. Die Schichtbereiche 31 und 33 sind sowohl chemisch als auch strukturell voneinander verschieden. Der erste Schichtbereich 31 besteht aus der genannten Magnesiumaluminat-/Magnesiumoxid-Mischung, während der zweite Schichtbereich 33 aus einer konventionellen Yttrium-stabilisierten Zirkondioxid-Keramik besteht.

Weiterhin kann der erste Schichtbereich 31 mit einer niedrigen oder sogar verschwindenden Porosität aufgebracht sein, während der zweite Schichtbereich 33 eine hohe Porosität aufweist. Hierdurch werden niedrige Wärmeleitfähigkeit mit hoher Abschirmung gegenüber korrosiven Gasen kombiniert.

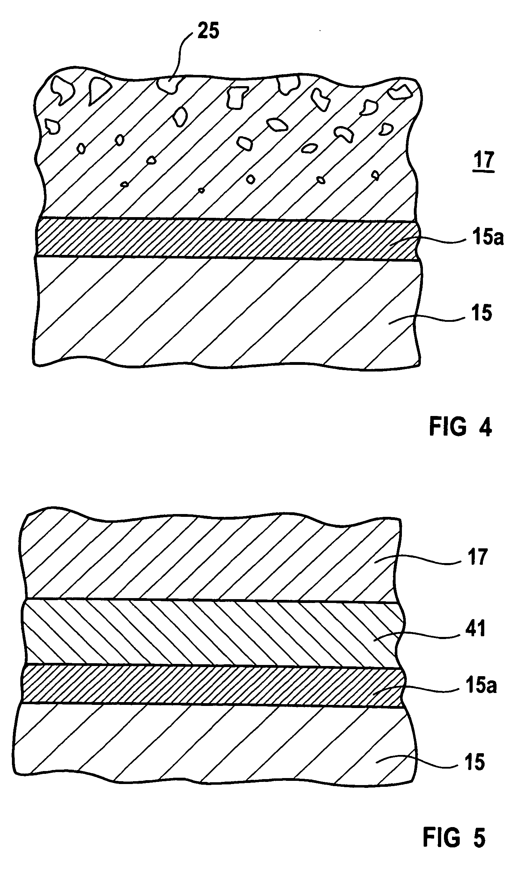

Figur 4 zeigt eine weitere Ausgestaltung einer auf einem Grundkörper 15 einer Gasturbinenschaufel 1 angeordneten keramischen Wärmedämmschicht 17. Die Hohlräume 25 vergrößern sich hier in ihrem mittleren Durchmesser in einer Richtung vom Grundkörper 15 weg nach außen. Durch diese graduelle oder gradierte Struktur werden wiederum die günstigen Eigenschaften hinsichtlich der Wärmeleitfähigkeit einerseits und der Abschirmwirkung gegenüber dem korrosiven Gas andererseits kombiniert.

In Figur 5 ist die keramische Wärmedämmschicht 17 auf eine keramische Grundschicht 41 aufgebracht. Die keramische Grundschicht 41 kann sich sowohl chemisch als auch strukturell von der keramischen Wärmedämmschicht 17 unterscheiden.

## Patentansprüche

1. Gasturbinenschaufel (1),
die einen Grundkörper (15) aus einer Nickel- oder Kobaltbasis-Superlegierung aufweist,
wobei auf den Grundkörper (15, 15a) eine keramische Wärmedämmschicht (17, 31, 33) aufgebracht ist,
und wobei ein an den Grundkörper (15, 15a) angrenzender erster Schichtbereich (31) aufgebracht ist,
auf den ein vom ersten Schichtbereich (31) verschiedener zweiter Schichtbereich (33) aufgebracht ist,
**dadurch gekennzeichnet, dass**
der erste Schichtbereich (31)
10 bis 95 Gew.-% Magnesiumaluminat (MgAl₂O₄),
5 bis 90 Gew.-% Magnesiumoxid (MgO),
0 bis 20 Gew.-% Aluminiumoxid (Al₂O₃),
sowie einen Rest an üblichen Verunreinigungen umfasst und in dem Körner (23) aus Magnesiumoxid (MgO) mit einem mittleren Durchmesser von 0,1 µm bis 10 µm in eine Matrix aus spinellförmigem Magnesiumaluminat (MgAl₂O₄) eingebettet sind,
und der zweite Schichtbereich (33) aus Yttriumoxid (Y₂O₃)-stabilisiertem Zirkondioxid (ZrO₂) besteht,
wobei die Schichtbereiche (31, 33) eine Porosität größer als 3 Vol-% aufweisen.

2. Gasturbinenschaufel (1) nach Anspruch 1,
bei der die Körner (23) in dem ersten Schichtbereich (31) einen mittleren Durchmesser von 0,1 µm bis 2 µm aufweisen.

3. Gasturbinenschaufel (1) nach Anspruch 1,
bei der der erste Schichtbereich (31) 55 bis 80 Gew.-% Magnesiumoxid (MgO) enthält.

4. Gasturbinenschaufel (1) nach Anspruch 1,
bei der der erste Schichtbereich (31) zusätzlich mindestens ein Oxid aus der Gruppe umfasst, welche CaO, SiO₂, ZrO₂ und Fe₂O₃ enthält.

5. Gasturbinenschaufel (1) nach Anspruch 1,
bei der der Grundkörper (15) eine auf die Superlegierung aufgebrachte metallische Korrosionsschutzschicht (15A) umfasst.

6. Gasturbinenschaufel (1) nach Anspruch 1,
bei der die keramische Wärmedämmschicht (17) auf eine keramische Grundschicht (41) aufgebracht ist, die eine Porosität kleiner als 2 Vol-% aufweist.

7. Gasturbinenschaufel (1) nach Anspruch 1,
bei der die Porosität in der keramischen Wärmedämmschicht (17) nach außen hin gradiert zunimmt.

## Claims

1. Gas turbine blade or vane (1),
which has a base body (15) made from a nickel- or cobalt-base superalloy,
a ceramic thermal barrier coating (17, 31, 33) having been applied to the base body (15, 15a),
and a first layer region (31), which adjoins the base body (15, 15a), having been applied,
to which first layer region (31) a second layer region (33), which is different from the first layer region (31), has been applied,
**characterized in that**
the first layer region (31) comprises
10 to 95% by weight of magnesium aluminate (MgAl₂O₄),
5 to 90% by weight of magnesium oxide (MgO),
0 to 20% by weight of aluminium oxide (Al₂O₃),
remainder standard impurities, and in which grains (23) of magnesium oxide (MgO) with a mean diameter of from 0.1 µm to 10 µm are embedded in a matrix of magnesium aluminate (MgAl₂O₄)
in spinel form,
and the second layer region (33) consists of yttria (Y₂O₃) -stabilized zirconium dioxide (ZrO₂),
the layer regions (31, 33) having a porosity of greater than 3% by volume.

2. Gas turbine blade or vane (1) according to Claim 1, in which the grains (23) in the first layer region (31) have a mean diameter of from 0.1 µm to 2 µm.

3. Gas turbine blade or vane (1) according to Claim 1, in which the first layer region (31) contains 55 to 80% by weight of magnesium oxide (MgO).

4. Gas turbine blade or vane (1) according to Claim 1, in which the first layer region (31) additionally comprises at least one oxide selected from the group consisting of CaO, SiO₂, ZrO₂ and Fe₂O₃.

5. Gas turbine blade or vane (1) according to Claim 1, in which the base body (15) comprises a metallic corrosion-resistant layer (15A) applied to the superalloy.

6. Gas turbine blade or vane (1) according to Claim 1, in which the ceramic thermal barrier coating (17) has been applied to a ceramic base layer (41) which has a porosity of less than 2% by volume.

7. Gas turbine blade or vane (1) according to Claim 1, in which the porosity in the ceramic thermal barrier coating (17) increases in a graduated manner towards the outside.

## Revendications

1. Aube (1) de turbine à gaz
qui a un corps (15) de base en un super alliage à base de nickel ou à base de cobalt ;
une couche (31, 33) calorifuge en céramique étant déposée sur le corps (15) de base ;
et une première zone (31) de couche voisine du corps (15) de base étant déposée ;
une deuxième zone (33) de couche différente de la première zone (31) de couche sur laquelle est déposée,
**caractérisée en ce que**
la première zone (31) de couche comprend
de 10 à 95 % en poids d'aluminate de magnésium (MgAl₂O₄) ;
de 5 à 90 % en poids d'oxyde de magnésium (MgO) ;
de 0 à 20 % en poids d'oxyde d'aluminium (Al₂O₃),
ainsi qu'un solde d'impuretés habituelles et dans laquelle des grains (23) en oxyde de magnésium (MgO) d'un diamètre moyen de 0,1 µm à 10 µm sont incorporés dans une matrice en aluminate de magnésium (MgAl₂O₄) en forme de spinelle ;
et la deuxième zone (33) de couche est en dioxyde de zirconium (ZrO₂) stabilisé par de l'oxyde d'yttrium (Y₂O₃) ;
les zones (31, 33) de couche ayant une porosité supérieure à 3 % en volume.

2. Aube (1) de turbine à gaz suivant la revendication 1, dans laquelle les grains (23) de la première zone (31) de couche ont un diamètre moyen de 0,1 µm à 2 µm.

3. Aube (1) de turbine à gaz suivant la revendication 1, dans laquelle la première zone (31) de couche contient de 55 à 80 % en poids d'oxyde de magnésium (MgO).

4. Aube (1) de turbine à gaz suivant la revendication 1, dans laquelle la première zone (31) de couche comprend en plus au moins un oxyde constitué du groupe qui contient CaO, SiO₂, ZrO₂ et FeO₃.

5. Aube (1) de turbine à gaz suivant la revendication 1, dans laquelle le corps (15) de base comprend une couche (15A) métallique de protection vis-à-vis de la corrosion déposée sur le super alliage.

6. Aube (1) de turbine à gaz suivant la revendication 1, dans laquelle la couche (17) calorifuge en céramique est déposée sur une couche (41) de base en céramique qui a une porosité plus petite que 2 % en volume.

7. Aube (1) de turbine à gaz suivant la revendication 1, dans laquelle la porosité augmente de manière graduelle dans la couche (17) calorifuge en céramique.
